# EUROPEAN PATENT SPECIFICATION

(11) **EP 0 268 137 B1**
(45) Date of publication and mention of the grant of the patent: **03.02.1993**
(21) Application number: 87116171.7
(22) Date of filing: 03.11.1987
(51) Int. Cl.: H02B 1/56

(54) **Metal-clad switchgear**
Metallgekapselte Schaltanlage
Installation de commutation blindée

(30) Priority: 15.11.1986 JP 272381/86
(43) Date of publication of application: 25.05.1988
(73) Proprietor: HITACHI, LTD., Chiyoda-ku, Tokyo 101 (JP)
(72) Inventor: Matsuzaki, Atsuhide, Suwacho-4-chome Hitachi-shi (JP); Ida, Mitsuyoshi, Hitachi-shi (JP)
(74) Representative: Strehl Schübel-Hopf Groening & Partner

(56) References cited:
- EP-A- 0 067 059
- FR-A- 1 513 022
- US-A- 3 730 264
- PATENT ABSTRACTS OF JAPAN vol. 4, no. 8 (E-166) 22 January 1980, & JP-A-54 148240

## Description

The present invention relates to a metal-clad switchgear and a means for cooling the same using a plurality of heat radiation casings utilizing natural ventilation without any fan as a cooling unit.

With the multiplication of applications of switchgears encased in an iron-plate box with an electric apparatus such as a circuit breaker or the like grounded to prevent short-accidents, if any happens, from extending to other areas, such switchgears are now used in various facilities including machine shops, chemical plants, sewage-treatment plants and power stations and substations in a ship or desert. Amid this trend, switchgears are used in environments which are becoming more and more unfavorable. In a switchgear apparatus with the ambient air thereof introduced into the switchgear by use of natural convection or fan, as is disclosed in JP-A-54-148240, the units in the switchgear apparatus are often contaminated with dust, moisture, gas or salt, thus presenting the hazard of an accident.

In the prior art, to prevent this hazard, the switchgear body is enclosed entirely with a cooling unit arranged adjacently to the switchgear body thereby to radiate the heat generated within the switchgear apparatus. An example of such a prior art apparatus is disclosed in JP-A-56-121308.

Specifically, the JP-A-56-121308 relates to a construction for cooling a sealed control panel. A plurality of heat exchange fins are mounted on the interior and exterior wall surfaces of a control panel of sealed construction, and the internal air is circulated by a circulation fan in the control panel to warm the heat-exchange fins. On the outside, a wind tunnel with a cooling fan is arranged on both sides of the control panel to cool the heat exchange fins on the exterior surface of the control panel, and by thus releasing the heat generated, the switchgear is cooled without introducing atmospheric air into the control panel, eliminating the need of any special equipment even in an environment containing considerable dust or moisture.

In the above-mentioned prior art apparatus, however, the fan, which is run continuously, has a service life as short as half year or one year. This poses a problem of maintenance or inspection as well as reliability of the switchgear which is intended for semi-permanent use. Also, no consideration is paid to the disposal of dust and the like that intrude into the cooling units. Further, there is no measure taken for preventing the reduction in the effect of cooling the heat generated in the switchgear due to an eddy current.

The prior art apparatuses pose a further problem of decrease in service life of the fan and reliability due to dust intrusion, a reduced cooling effect caused by the heat generated from the eddy current traced to the current flowing in the iron plate of the switchgear box, and also a lower radiation effect caused by the constant velocity of flow.

In reference US-A-3 730 264 is disclosed a V-shaped ventilation partition plate with a downwardly extending flap which inclines right and left centering around a middle point thereof. The partition plate guides heated cooling air coming from below to be exhausted to lateral regions, at the same time admitting cool air to be introduced to above the partition plate from the front side of the unit.

The object of the present invention, which has been developed in view of the above-described points, is to provide a metal-clad switchgear with improved cooling characteristics, high reliability over long periods of time and usable in any environment, which further allows for easy removement of dust for an improved cooling effect.

This object is met by the invention according to claim 1. Advantageous embodiments are described in claims 2 to 4.

Due to the fact that each exhaust hole in the radiation casing is made narrower than the intake hole, the exhaust rate in the radiation casing is increased for a higher cooling effect.

Further, even in the case where dust absorbed by way of the intake holes together with the air falls into the radiation casings, first and second ventilation partition plates doubling as a dust receptacle easily remove the dust.

The heat generated within the switchgear is radiated along the surface of the switchgear box. Since a plurality of switchgears are normally arranged, however, heat is released only from the front and rear sides and ceiling of the switchgears. Nevertheless, heat radiation from the front and rear sides or ceiling is not expected in view of the fact that heat is generated in each of the parts into which the interior of a switchgear is generally divided by means of partition walls according to different applications.

In this reason, there are spaces provided between the switchgears and a radiation casing is arranged in each space. Air is introduced from a plurality of intake holes under the front and rear surfaces of the radiation casing and exhaused from a plurality of exhaust holes in the ceiling. Specifically, the ambient air is ventilated from the intake holes to the exhaust holes. During this ventilation, the heat in the switchgear is released through side plates of the switchgear box through the exhaust holes. The radiation parts of the side plates (those parts adjacent to the circuit breaker) are located upward of the intake holes. The air in the radiation casings which, absorb heat at the radiation parts and moves upward, flows continuously toward the exhaust holes from the intake holes.

The amount of heat radiated from the side plates depends on the difference between the internal temperature of the switchgear and the temperature of the radiation casings and the thermal resistance of the side plates. If eddy current causes heat generation by the side plates, actual heat resistance increases, thereby reducing the heat radiation from the side plates in the switchgear. The real cooling effect is thus reduced, and therefore it is necessary to prevent the heat generation from the side plates due to eddy current. Experiments show that the temperature distribution from the side plates is higher at a given point nearer to the heat source generating heat by conduction of current, and in view of this, the parts representing 94% of the heat generation obtained from the heat generation distribution are made of a non-magnetic plate. In this way, the heat generation of the side plates is reduced with the cooling effect improved 1.5 times.

Preferred embodiments of the present invention will now be described in conjunction with the accompanying drawings, in which:
Fig. 1 is a perspective view showing a first embodiment of a metal-clad switchgear according to the present invention;
Fig. 2 is a sectional view taken along line II-II in Fig. 1;
Fig. 3 is a sectional view taken along line III-III in Fig. 1;
Fig. 4 is a sectional view showing a metal-clad switchgear according to another embodiment of the present invention; and
Fig. 5 is a diagram showing the temperature distribution characteristics of the side plates with and without a non-magnetic plate.

A metal-clad switchgear and a method of cooling the same according to the present invention will be explained below with reference to an embodiment.

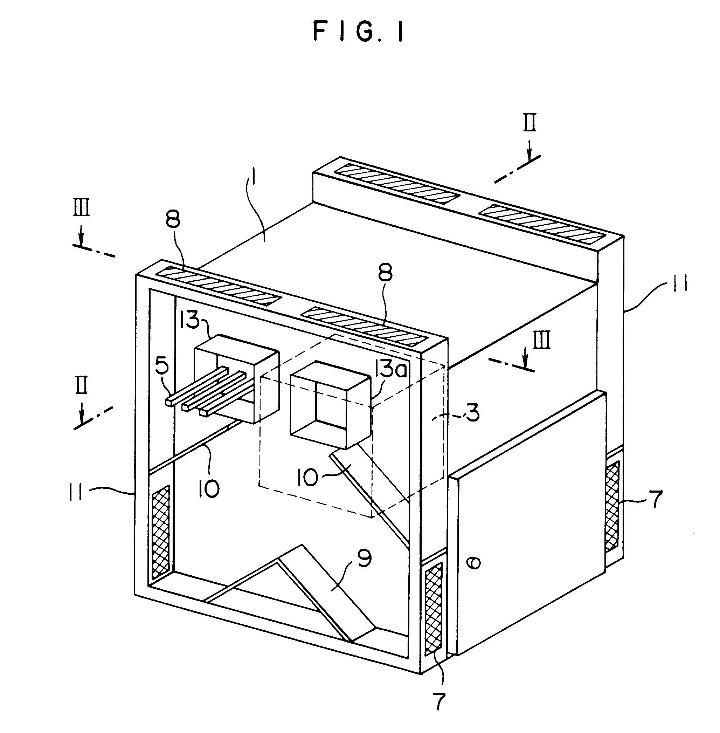

A first embodiment of the present invention is shown in Figs. 1 to 3. As shown in the drawings, a metal-clad switchgear box 1 is partitioned by a partition wall 2, and includes a circuit breaker chamber 4 having a circuit breaker 3 for turning on and off the current and a bus chamber 6 having a bus 5 for conducting current to the box 1 of each switchgear.

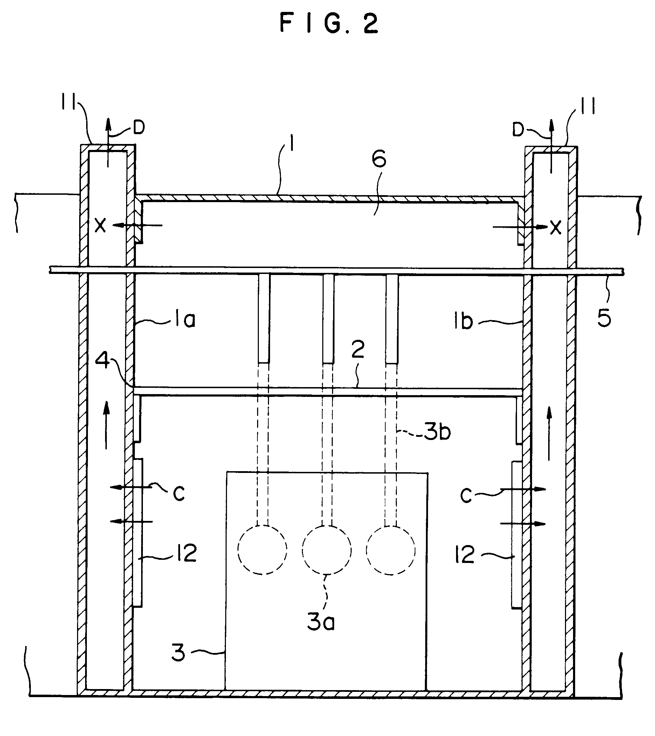

In Fig. 2, a circuit breaker portion 3A of a circuit breaker 3 not shown in connected to the bus 5 through a branching conductor 3B.

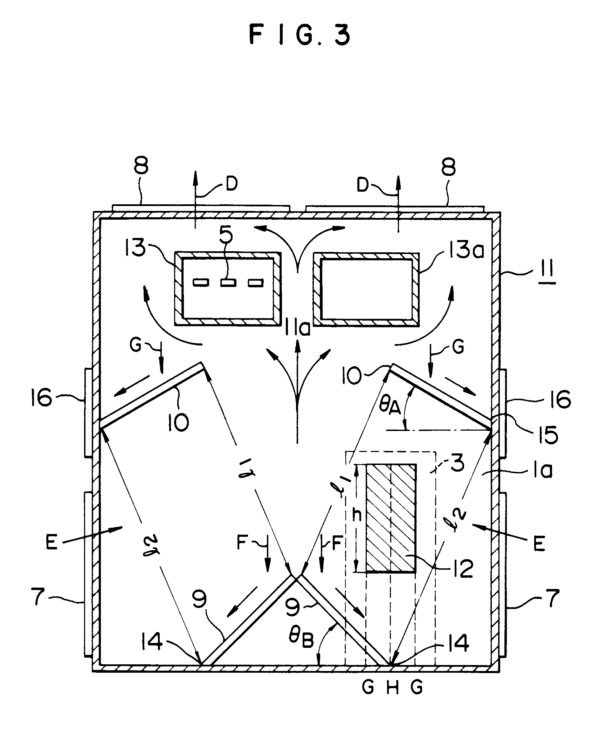

In Fig. 2, reference numerals 1a, 1b designate side plates. In this configuration, the box 1 of the metal-clad switchgear is provided with a cooling unit on both sides thereof for discharging the heat generated in the box, which cooling unit is arranged on the side plates 1a, 1b with an eddy current i flowing therein due to the magnetic fluxes caused by the current in the circuit breaker 3. Each cooling unit is formed of a radiation casing 11 including removable intake holes 7 at the lower part of front and rear sides and exhaust holes 8 on the top thereof, and first and second ventilation partition plates 9, 10 therein doubling as a receptacle of intruding dust, of which as shown in Fig. 3, the width of each exhaust hole 8 (ℓ₁ in Fig. 3) is narrower than the width of the intake hole (ℓ₂ in Fig. 3) (ℓ₁ < ℓ₂). In addition, non-magnetic plates 12 made of such a material as stainless steel "SUS 304" are arranged at a point on the side plates 1a, 1b facing the circuit breaker 3. These non-magnetic plates 12 reduce the heat generation by eddy current i.

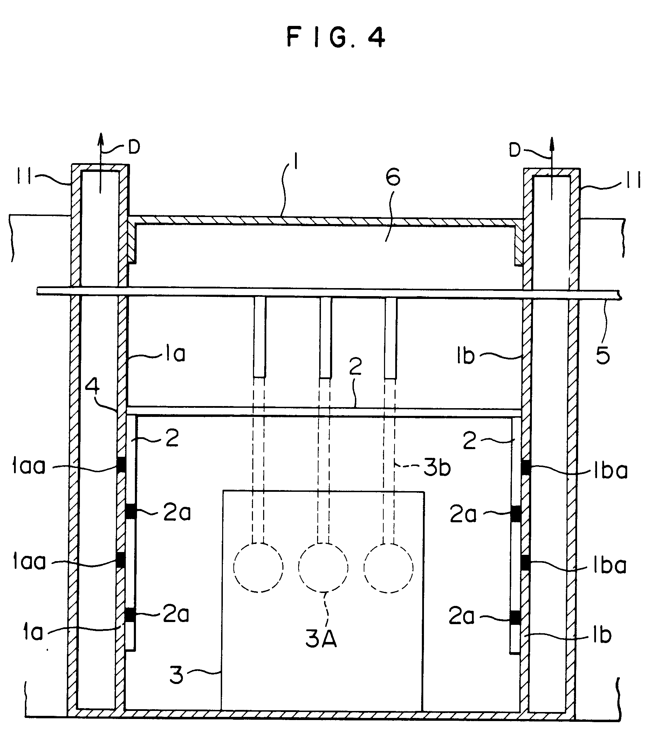

As an alternative, as shown in Fig. 4, the side plates 1a, 1b may include a plurality of slits 1aa or 1ba, or there may be a plurality of slits 2a formed in the partition walls 2 in staggered relationship with each other at a portion facing the side plates 1a, 1b respectively. By doing so, dust is easily removed for an improved cooling efficiency of the metal-clad switchgear.

More specifically, as shown in Fig. 2, the switchgear box 1 and a radiation casings 11 arranged adjacently to the side plates 1a, 1b are partitioned by the side plates 1a, 1b without any space therebetween, and therefore no air flows therebetween. The radiation casings 11, as shown in Fig. 1, have buses 5 passing therethrough, and further include a partition frame 13 (13a) for partitioning the interior of the radiation casings 11 and the buses 5, the intake holes 7 for sucking the ambient air, and the exhaust holes 8 for discharging the air, the intake holes 7 being adapted to be taken off from outside.

Furthermore, as shown in Fig. 3, first and second ventilation partition plates 9, 10 forming a ventilation path are arranged. The angle ϑ_{B} between the first ventilation partition plate 9 and a floor 14 is rendered larger than the angle ϑ_{A} of the second ventilation partition plate 10 to the horizontal direction with respect to the side wall (ϑ_{B} > ϑ_{A}). The first and second ventilation partition plates 9, 10 are constructed to function as a dust receptacle at the same time.

The air flow is capable of being changed and dust removed by appropriately changing the angles ϑ_{B} and ϑ_{A} of the first and second ventilation partition plates 9, 10. In other words, in Fig. 3, if the angle ϑ_{B} is made larger than the angle ϑ_{A}, the width ℓ₁ becomes very narrow as compared with the width ℓ₂, and the air flow velocity becomes very high. If the angle ϑ_{B} is made only slightly larger than the angle ϑ_{A}, on the other hand, the width ℓ₁ approaches the width ℓ₂, thus reducing the air flow velocity.

The non-magnetic plates 12 that are welded to the side plates 1a, 1b as shown in Fig. 2 are positioned at such points and have such a size as determined in the manner mentioned below.

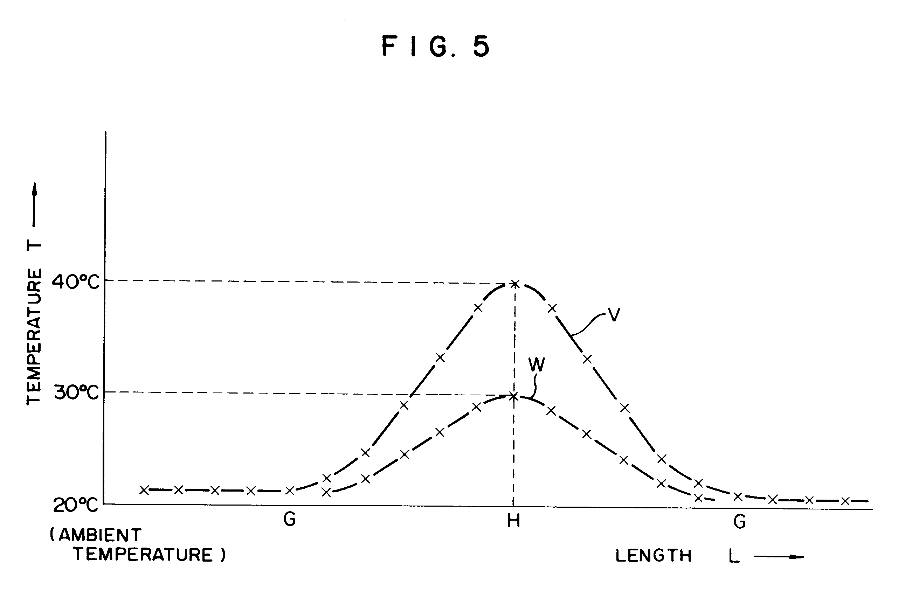

Fig. 5 shows a temperature characteristic of the side plates 1a, 1b with and without non-magnetic plates 12 according to the present invention.

The temperature distribution due to the eddy current caused in the side plates 1a, 1b determined from an experiment is plotted in the diagram of Fig. 5 with the abscissa representing the position L along the depth of the side plates 1a, 1b and the ordinate representing the temperature T at each position. As shown in this diagram, the temperature T is highest at a position H nearest to the circuit breaker 3 for both the curve V of the side plates 1a, 1b without the non-magnetic plate 12 and the curve W of the side plates 1a, 1b with the non-magnetic plate 12. The temperature T between G and G including the position H, however, is lower for the curve W with the non-magnetic plate 12 than for the curve V without the non-magnetic plate 12. This length between G and G accounts for 94% (percent) of the total heat generation. The width of the non-magnetic plate 12 is made equal to the length between G and G, and the height h of the non-magnetic plate 12 is also determined in a manner similar to the width.

The heat generated in the circuit breaker 3 is conducted to the air in the radiation casing 11 along the arrow C in Fig. 2. The heat generated in the bus 5, on the other hand, cannot be radiated through the partition wall 2, and is conducted into the air in the radiation box 11 through the side plates 1a, 1b along the arrow x.

The radiation path 11a of each radiation casing 11 is so constructed that the ambient air flows in by way of the intake holes 7 along the arrow E in Fig. 3 and flows out of the exhaust holes 8 along the direction of arrow D as shown in Figs. 2 and 3 through the radiation path 11a. Specifically, the air that has been introduced by way of the intake holes 7 flows out of the exhaust holes 8 through the radiation path 11a after being heated by the side plates 1a, 1b. In this way, the incoming air passes between the second ventilation partition plate 10 and the first ventilation partition plate 9. As explained above, the exhaust side of the first ventilation partition plate 9 and the second ventilation partition plate 10 is smaller in angle, than the intake side that is ϑ_{A} < ϑ_{B}, with the result that the width ℓ₁ of the ventilation path on the exhaust hole 8 side is narrower than the width ℓ₂ of the ventilation path on the intake hole 7 side. As a consequence, the air flow velocity v₀ is higher at the exhaust hole 8 side, and the cooling effect causes the dust on the side plates 1a, 1b to fall at the same time.

The dust that has intruded by way of the intake holes 7 falls in the direction of arrow F. Since the first ventilation partition plate 9 is formed at an angle ϑ_{B} to the horizontal direction, however, the falling dust is deposited on the floor 14 and may be easily removed by taking off the intake hole 7. Further, the dust near the exhaust holes 8 that falls in the direction of arrow G is deposited on a part 15 adjacent to the front and rear surfaces of the radiation casings 11 since the second ventilation partition plate 19 is formed at an angle ϑ_{A} to the horizontal direction against the side wall. The dust thus deposited can be easily removed by taking off a cover 16 provided on the adjacent part 15, thus eliminating any inconvenience of the ventilation being hampered by the dust deposit.

The non-magnetic plates 12 welded to the side plates 1a, 1b cause a temperature distribution curve W as mentioned above, from which it is seen that the thermal resistance can be reduced for an increased radiation effect.

As explained above, according to the embodiment under consideration, a radiation casing using natural ventilation can reduce the internal temperature of the switchgear in stable manner, and therefore the performance of the switchgear box 1 is not affected by the environment.

It will thus be understood from the foregoing description that according to the present invention, in which radiation casings utilizing natural ventilation are provided, dust can be easily removed to contribute to an improved cooling effect, thereby realizing a compact metal-clad switchgear from which dust is easily removable for a higher cooling efficiency.

## Claims

1. A metal-clad switchgear comprising:
a switchgear box (1) partitioned by a plurality of partition walls (2) and including a circuit breaker chamber (4) with a circuit breaker (3) and a bus chamber (6) with a plurality of buses (5); and
a cooling unit (11) arranged on right and left side plates (1a, 1b) of the switchgear box (1) and having a cooling path for exhausting a ventilation air, flowing from intake holes (7) to exhaust holes (8), characterized in that there are provided intake holes (7) on the lower side of the front and rear portions of the cooling unit and exhaust holes (8) on the upper side of the front and rear portions of the cooling unit (11) respectively, communicating with the outside of the cooling unit (11), and there are provided in the cooling unit (11) first and second inclining type ventilation partition plates (9, 10) defining ventilation paths in a way that the width ℓ₁ of each ventilation path on the exhaust hole 8 side is narrower than the width ℓ₂ of each ventilation path on the intake hole 7 side (i.e. ℓ₁ < ℓ₂).

2. The metal-clad switchgear according to claim 1, characterized in that there is provided means for removing dust connected with said cooling path at the front and rear portions of said cooling unit (11) provided with said first and second ventilation partition plates (9, 10).

3. The metal-clad switchgear according to claim 1, characterized in that there is provided means for preventing heat generation due to eddy current flowing from said circuit breaker (3) and buses (5) on the right and left side plates (1a, 1b) corresponding to said circuit breaker chamber (4).

4. The metal-clad switchgear according to claim 3, characterized in that non-magnetic plates (12) are arranged at a point on the side plates (1a, 1b) facing the circuit breaker (3).

## Patentansprüche

1. Metallgekapselte Schaltanlage, umfassend
ein Schaltanlagengehäuse (1), das durch mehrere Trennwände (2) partitioniert ist und eine Trennschalterkammer (4) mit einem Trennschalter (3) und eine Leitungskammer (6) mit mehreren Sammelschienen (5) enthält; und
eine Kühleinheit (11), die auf rechten und linken Seitenplatten (1a, 1b) des Schaltanlagengehäuses (1) angeordnet ist und einen Kühlpfad zum Durchblasen von Ventilationsluft, die von Ansaugöffnungen (7) zu Ausblasöffnungen (8) strömt, enthält, dadurch gekennzeichnet, daß Ansaugöffnungen (7) im unteren Bereich der Vorder- und Hinterabschnitte der Kühleinheit und Ausblasöffnungen (8) im oberen Bereich der Vorder- und Hinterabschnitte der Kühleinheit (11) vorgesehen sind, die mit dem Äußeren der Kühleinheit (11) kommunizieren, und daß in der Kühleinheit (11) erste und zweite schräg ausgebildete Ventilations-Trennplatten (9, 10) vorgesehen sind, die Ventilationspfade auf eine derartige Weise definieren, daß die Breite 1₁ eines jeden Ventilationspfades auf der Ausblasöffnungsseite 8 schmaler ist als die Breite 1₂ des Ventilationspfades auf der Ansaugöffnungsseite 8 (d.h. 1₁<1₂).

2. Die metallgekapselte Schaltanlage nach Anspruch 1, dadurch gekennzeichnet, daß Mittel zur Beseitigung von Schmutz vorgesehen sind, die mit dem Kühlpfad an den Vorder- und Hinterabschnitten der mit den ersten und zweiten Ventilationstrennplatten (9, 10) versehenen Kühleinheit (11) verbunden sind.

3. Die metallgekapselte Schaltanlage nach Anspruch 1, dadurch gekennzeichnet, daß Mittel zur Verhinderung von Wärmeerzeugung durch Wirbelströme vorgesehen sind, die von den Trennschaltern (3) und Sammelschienen (5) auf den der Trennschalterkammer (4) zugeordneten rechten und linken Seitenplatten (1a, 1b) fließen.

4. Die metallgekapselte Schaltanlage nach Anspruch 3, dadurch gekennzeichnet, daß unmagnetische Platten (12) an einer dem Trennschalter (3) zugewandten Stelle auf den Seitenplatten (1a, 1b) angeordnet sind.

## Revendications

1. Installation de commutation placée sous capot métallique, comprenant :
un boîtier (1) subdivisé par une pluralité de parois de séparation (2) et comprenant une chambre (4) pour un coupe-circuit, contenant un coupe-circuit (3), et une chambre (6) pour barres omnibus, contenant une pluralité de barres omnibus (5); et
une unité de refroidissement (11) disposée sur des plaques de droite et de gauche (1a,1b) du boîtier (1) de l'installation de commutation et possédant un trajet de refroidissement pour évacuer l'air de ventilation, qui pénètre par des trous d'admission (7) en direction de trous d'évacuation (8), caractérisé en ce qu'il est prévu respectivement des trous d'admission (7) sur la face inférieure des parties avant et arrière de l'unité de refroidissement et des trous d'avacuation (8) sur la face supérieure des parties avant et arrière de l'unité de refroidissement (11), qui communiquent avec l'extérieur de l'unité de refroidissement (11), et qu'il est prévu, dans l'unité de refroidissement (11), des première et seconde plaques de séparation (9,10) pour la ventilation de type inclinable, qui définissent des trajets de ventilation de telle sorte que la largeur l₁ de chaque trajet de ventilation du côté des trous d'évacuation (8) est inférieure à la largeur l₂ de chaque trajet de ventilation sur le côté des trous d'admission (7) (c'est-à-dire que l'on a l₁ < l₂).

2. Installation de commutation placée sous capot métallique selon la revendication 1, caractérisée en ce qu'il est prévu des moyens pour éliminer la poussière raccordés audit trajet de refroidissement au niveau des parties avant et arrière de ladite unité de refroidissement (11) équipée desdites première et seconde plaques de séparation pour la ventilation (9,10).

3. Installation de commutation placée sous capot métallique selon la revendication 1, caractérisée en ce qu'il est prévu des moyens pour empêcher une production de chaleur due à des courants de Foucault provenant dudit coupe-circuit (3) et desdites barres omnibus (5) sur les plaques de droite et de gauche (1a,1b) correspondant à ladite chambre (4) logeant le coupe-circuit.

4. Installation de commutation placée sous capot métallique selon la revendication 3, caractérisée en ce que des plaques amagnétiques (12) sont disposées sur les plaques latérales (1a,1b) en un emplacement, qui est en vis-à-vis du coupe-circuit (3).
